# EUROPEAN PATENT SPECIFICATION

(11) **EP 0 793 884 B1**
(45) Date of publication and mention of the grant of the patent: **14.01.2004**
(21) Application number: 95937096.6
(22) Date of filing: 22.11.1995
(51) Int. Cl.: H04M 3/30

(54) **A METHOD FOR A CONTINUOUS MONITORING OF AN ANALOGUE SUBSCRIBER NETWORK**
VERFAHREN ZUR KONTINUIERLICHEN ÜBERWACHUNG EINES ANALOGEN TEILNEHMERNETZWERKES
PROCEDE DE CONTROLE CONTINU D'UN RESEAU D'ABONNES ANALOGIQUE

(30) Priority: 23.11.1994 FI 945504
(43) Date of publication of application: 10.09.1997
(73) Proprietor: Nokia Corporation, 02150 Espoo (FI)
(72) Inventor: TIIHONEN, Arto, FIN-90500 Oulu (FI); KUORELAHTI, Seppo, FIN-00390 Helsinki (FI); ANNALA, Heikki, FIN-90500 Oulu (FI)
(74) Representative: Holmström, Stefan Mikael
(86) International application number: PCT/FI1995/000644
(87) International publication number: WO 1996/017464

(56) References cited:
- EP-A- 0 577 022
- US-A- 5 195 124

## Description

The invention relates to a method for a continuous monitoring of an analogue subscriber network. A considerable part of the equipment of the telephone exchange belongs to the subscriber network, that is, to the part that connects subscribers and arranges subscriber signalling to the rest of the telephone network. As the proportion of the subscriber network is large, its real-time monitoring is significant.

The continuous monitoring of an analogue subscriber network refers to the testing of the operational condition that is performed automatically at regular intervals for analogue subscribers. The object of monitoring is to detect the faults of the analogue subscriber network before they disturb telephone traffic. An analogue subscriber network refers here both to subscriber lines and to subscriber interfaces.

Previously, monitoring has been performed by means of centralized meters, that is, by means of an accurate but expensive equipment disposed at separate service units. As one meter is common to a large group of subscribers, monitoring frequency has not been very high.

Previously there is also known from the EP-application A-0 577 022 a solution where the subscriber lines are monitored by a meter arranged in a remote terminal. Such a solution is rather expensive as the meter arranged in each remote terminal must be of high quality in order to be able to carry out a thorough and detailed fault location process.

The object of the present invention is to accomplish a method with which the subscriber network can be continuously monitored and thus faults will be detected and located faster. The method of the invention is characterized in that monitoring is performed
- by monitoring one subscriber at a time with a monitoring meter integrated into the subscriber module;
- by testing the condition of the lines and the interfaces of each monitored subscriber connection being monitored to find out;
- by giving an alarm when a fault is detected;
- by proceeding after the test to test the next subscriber connection until all the subscribers connected to the subscriber module are tested; and
- by starting a new cycle of subscriber monitoring.

In the solution of the invention, the monitoring meters are distributed, that is, a monitoring meter is integrated into each subscriber module. Thus, the monitoring frequency can be increased and faults can be detected faster. Some concessions have to be made for accuracy as the distributed meters have to be inexpensive but besides distributed meters, previous centralized meters remain to be used by means of which faults are located and repairs are verified more accurately. These expensive meters are, however, needed less than before.

The other preferred embodiments of the invention are characterized by what is disclosed in the appended claims.

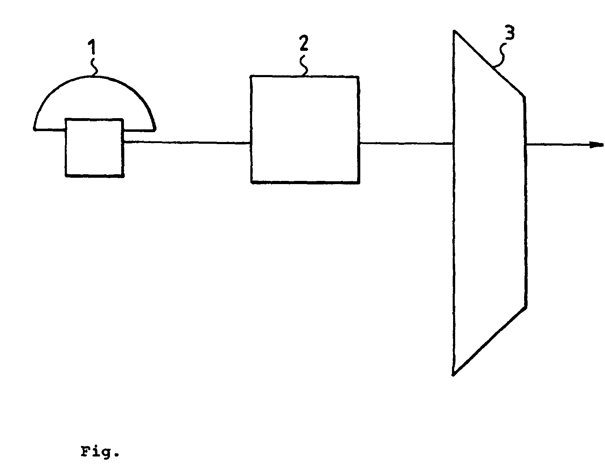

In the following, the invention will be explained in more detail by means of an example with reference to the attached drawing that illustrates the schematic structure of the subscriber interface.

The figure illustrates subscribers connected to one subscriber module 2 with a common telephone symbol 1. The subscriber module 2 comprises A/D and D/A conversions required for analogue subscribers. The subscriber module is in this way interfaced to the rest of a telephone exchange 3 by digital signals. The subscriber stage 1 thus has a connection to various control and switching components of the telephone exchange 3. The subscriber module can be a local module, that is, in the same space as the telephone exchange 3, or a remote subscriber module in which case the module is situated separate from the exchange.

The tests for each subscriber can be performed with a so-called ILMT meter known per se (Integrated Line and Module Tester) which is part of the controller of the subscriber module and therefore automatically present in each module. The subscriber lines and interfaces to be tested are connected via test buses with the ILMT meter, whereby the meter measures the desired features from the buses. In addition, the ILMT meter can be connected via a PCM line to a subscriber connection, whereby speech path tests are also possible. The ILMT meter comprises measuring relays, measuring amplifiers, measuring loads and the like equipment. The processor in the controller runs software that collects measuring signals, calculates and interprets the result.

The continuous monitoring of an analogue subscriber network according to the invention is performed with a meter disposed in the subscriber module 2 that is integrated into the controller card of the module. Subscribers 1 are dealt with one at a time. The tests on the condition of the lines and the interfaces are performed for each subscriber and if a fault is detected, an alarm is given to the operating personnel, though without blocking call attempts. Also, more accurate fault location can be started automatically with an accurate centralized meter.

The following are examples of the tests that can be performed:
A. Subscriber line tests
   - outside voltage AC/DC (with respect to the earth)
   - insulation resistance (with respect to the earth and to the input voltage)
   - capacitances (with respect to the earth)
   - loop resistances (the resistance of the telephone set + of the line, the receiver offhook)
B. Subscriber interface
   - supply voltage (loaded/unloaded) *
   - ring voltage (loaded/unloaded + ring trip test) *
   - audible tone (busy tone) testing
   - polarity reversal testing
   - call charge meter service testing
   - the state of subscriber loop (onhook/offhook) tests *
   - loop dialling testing
   - reflection attenuation
   - unbalance to earth attenuation
   - half-channel attenuations (in directions A/D and D/A)
   - rotative attenuation
   - loop test/fork test (speech channel test) *

The tests in practice performed with an ILMT meter are marked by asterisk * and by means of these tests the operation of a basic call can be secured. As for the equipment, the same tests can be performed both with a centralized and with a distributed ILMT meter. The difference is mainly that measuring with a centralized meter is more accurate than with a distributed meter.

When a subscriber has been tested, the testing will proceed with the next subscriber. Depending on the system, a couple of dozens to a couple of hundreds of subscribers can be connected to one subscriber module. The number of subscriber modules in a telephone exchange is the number of subscribers divided by the subscriber number of one subscriber module, that is, the monitoring of the operational condition proceeds simultaneously in each subscriber module. When all the subscribers in the module have been dealt with, the monitoring cycle starts again. Therefore, monitoring is continuous.

The monitoring can be performed as a background process in the subscriber module so that it will not disturb normal telephone traffic.

When the fault situation is found to have departed, the alarm is cancelled.

Monitoring measurement is time-critical and it must not increase the unavailability for subscribers, nor disturb calls. A call takes priority over the monitoring measurement. Operating personnel can, when needed, remove a subscriber from being monitored. In addition, operating personnel can, when needed, decide which tests are performed in monitoring, that is, some subset of all possible tests can be used.

It is obvious to one skilled in the art that the various embodiments of the invention are not restricted to the example shown above, but they can vary within the scope of the attached claims.

## Claims

1. A method for a continuous monitoring of an analogue subscriber network, the subscriber network comprising several subscriber modules into which a monitoring meter is integrated, wherein monitoring is performed at each said subscriber module:
- by monitoring one subscriber (1) at a time with a monitoring meter integrated into the subscriber module (2); and
- by testing the condition of the lines and the interfaces of each monitored subscriber connection;
**characterized**
- **by** giving an alarm when a fault is detected and by starting automatically a more accurate fault location process with a centralized meter with which the condition of the lines and the interfaces connected to several different subscriber modules can be checked;
- by proceeding after the test to test the next subscriber connection uncil all the subscribers (1) connected to the subscriber module (2) are tested; and
- by starting a new cycle of subscriber monitoring.

2. A method according to claim 1, **characterized in that** monitoring is performed as a background process in the subscriber module (2) without blocking normal telephone traffic.

## Patentansprüche

1. Verfahren zur kontinuierlichen Überwachung eines analogen Teilnehmernetzwerks, wobei das , Teilnehmernetzwerk mehrere Teilnehmermodule enthält, in die ein Überwachungsmessgerät integriert ist, wobei an jedem Teilnehmermodul eine Überwachung durchgeführt wird:
- durch Überwachen jeweils eines Teilnehmers (1) mit einem in das Teilnehmermodul (2) integrierten Überwachungsmessgerät; und
- durch Prüfen des Zustands der Leitungen und der Schnittstellen jeder überwachten Teilnehmerverbindung;
**gekennzeichnet durch**
- Geben eines Alarms, wenn ein Fehler erfasst wird, und automatisches Starten eines genaueren Fehlerlokalisierungsprozesses mit einem zentralisierten Messgerät, mit dem der Zustand der Leitungen und der Schnittstellen überprüft werden kann, die an mehrere unterschiedliche Teilnehmermodule angeschlossen sind;
- Fortfahren nach der Prüfung zum Prüfen der nächsten Teilnehmerverbindung, bis alle an das Teilnehmermodul (2) angeschlossenen Teilnehmer (1) geprüft sind; und
- Starten eines neuen Durchgangs einer Teilnehmerüberwachung.

2. Verfahren gemäß Anspruch 1, **dadurch gekennzeichnet, dass** eine Überwachung als ein Hintergrundprozess in dem Teilnehmermodul (2) durchgeführt wird, ohne normalen Telefonverkehr zu blockieren.

## Revendications

1. Procédé permettant le contrôle continu d'un réseau analogique d'abonné, le réseau d'abonné comprenant plusieurs modules d'abonné dans lesquels un appareil de contrôle est intégré, dans lequel le contrôle est effectué au niveau de chaque module d'abonné susdit :
- en contrôlant un abonné (1) à la fois à l'aide d'un appareil de contrôle intégré dans le module d'abonné (2) ; et
- en testant l'état des lignes et les interfaces de chaque connexion d'abonné contrôlé ;
**caractérisé**
- **par** l'envoi d'un signal d'alerte lorsqu'une anomalie est détectée et par le lancement automatique d'un processus de localisation plus précis à l'aide d'un appareil de mesure centralisé grâce auquel peut être vérifié l'état des lignes et des interfaces reliés à plusieurs modules d'abonné différents ;
- par la poursuite, après cette vérification, des vérifications de la connexion d'abonné suivante jusqu'à ce que tous les abonnés (1) reliés au module d'abonné (2) soient vérifiés ; et
- par la mise en place d'un nouveau cycle de contrôle de l'abonné.

2. Procédé selon la revendication 1, **caractérisé en ce que** le contrôle est effectué en arrière-plan dans le module d'abonné (2) sans bloquer le trafic téléphonique normal.
